(19) Europäisches Patentamt
European Patent Office
Office européen des brevets

(11) **EP 4 465 719 A1**

(12) **EUROPEAN PATENT APPLICATION**
published in accordance with Art. 153(4) EPC

(43) Date of publication:
**20.11.2024 Bulletin 2024/47**

(51) International Patent Classification (IPC):
**H04W 72/04** (2023.01)

(21) Application number: **22919407.1**

(22) Date of filing: **12.01.2022**

(86) International application number:
**PCT/CN2022/071680**

(87) International publication number:
**WO 2023/133742 (20.07.2023 Gazette 2023/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **ZHU, Yajun**
**Beijing 100085 (CN)**

(74) Representative: **Dehns Germany Partnerschaft mbB**
**Theresienstraße 6-8**
**80333 München (DE)**

(54) **METHOD AND APPARATUS FOR DETERMINING PROCESSING TIME PARAMETER OF PHYSICAL DOWNLINK SHARED CHANNEL**

(57) Disclosed in embodiments of the present disclosure is a method for determining a processing time parameter of a physical downlink shared channel (PDSCH), applicable to the technical field of communications. The method performed by a terminal device comprises: the terminal device determines, according to a state fed back by each hybrid automatic repeat request (HARQ) process, a first time parameter required for processing a PDSCH carried by each HARQ process. In this way, the determined first time parameter is more accurate, thereby not only avoiding the influence on an HARQ due to the fact that the determined processing time is too short, but also avoiding the waste of resources due to the fact that the determined processing time is too long.

determining a first time parameter required for processing a physical downlink shared channel (PDSCH) carried by a hybrid automatic repeat request (HARQ) process according to a status of a feedback of the HARQ process ⟩ 201

FIG. 2

EP 4 465 719 A1

## Description

### FIELD

The present disclosure relates to the field of communication technology, and more particularly, to a method and apparatus for determining a processing time parameter for a physical downlink shared channel.

### BACKGROUND

In a communication system, in order to avoid impact on a hybrid automatic repeat request (HARQ), a scheduling limit time is defined for a physical downlink shared channel (PDSCH). Within the scheduling limit time, the terminal device is not expected to feed back an HARQ demodulation result for the PDSCH. However, with the proposal of HARQ feedback disabled, how to accurately determine the scheduling limit time for the PDSCH has become an urgent problem to be solved at present.

### SUMMARY

Embodiments of the present disclosure provide a method and apparatus for determining a processing time parameter for a physical downlink shared channel (PDSCH), which can determine a first time parameter required for processing the PDSCH carried by a hybrid automatic repeat request (HARQ) process of a terminal device according to a status of a feedback of the HARQ process of the terminal device.

In a first aspect, embodiments of the present disclosure provide a method for determining a processing time parameter for a physical downlink shared channel (PDSCH). The method is performed by a terminal device, and includes: determining a first time parameter required for processing the PDSCH carried by a hybrid automatic repeat request (HARQ) process according to a status of a feedback of the HARQ process.

In the present disclosure, the terminal device determines the first time parameter required for processing the PDSCH carried by the HARQ process according to the status of the HARQ feedback of the HARQ process. In this way, the first time parameter determined thereby is more accurate, thereby not only avoiding the impact on the HARQ due to the short processing time, but also avoiding resource waste due to the long processing time.

Optionally, determining the first time parameter required for processing the PDSCH carried by the HARQ process according to the status of the feedback of the HARQ process includes: in response to the feedback of the HARQ process being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or in response to the feedback of the HARQ process being disabled, determining the first time parameter required for processing the PDSCH carried by the HARQ process according to one of the first subcarrier spacing and the second subcarrier spacing.

Optionally, determining the first time parameter required for processing the PDSCH carried by the HARQ process according to the status of the feedback of the HARQ process includes: in response to the feedback of the HARQ process being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or in response to the feedback of the HARQ process being disabled, determining the first time parameter required for processing the PDSCH carried by the HARQ process according to one of the first subcarrier spacing, the second subcarrier spacing, and a second preset subcarrier spacing.

Optionally, the first preset subcarrier spacing is any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink bandwidth part in an active status.

Optionally, the second preset subcarrier spacing is any of: a subcarrier spacing corresponding to an uplink physical channel assumed to transmit the HARQ feedback; or a subcarrier spacing corresponding to an uplink bandwidth part channel in an active status.

Optionally, determining the first time parameter required for processing the PDSCH carried by the HARQ process according to the status of the feedback of the HARQ process includes: determining candidate subcarrier spacings corresponding to the PDSCH carried by the HARQ process according to the status of the feedback of the HARQ process; determining second time parameters corresponding to the candidate subcarrier spacings respectively according to a preset mapping relationship between second time parameters and subcarrier spacings; determining a mapping relationship table between second time parameters and a number of symbols according to a capability of the terminal device; and determining a maximum first time parameter corresponding to the second time parameters according to a mapping relationship in the mapping relationship table.

Optionally, the method further includes: in response to the feedback of the HARQ process being enabled, determining an earliest time for transmitting the feedback of the HARQ process according to the first time parameter required for processing the PDSCH carried by the HARQ process; or in response to the feedback of the HARQ process being disabled, determining an earliest time for receiving another PDSCH carried by the HARQ process according to the first time parameter required for processing the PDSCH carried by the HARQ process.

In a second aspect, embodiments of the present disclosure provide a method for determining a processing time parameter for a physical downlink shared channel (PDSCH). The method is performed by a network device, and includes: determining, by the network device, a first time parameter required by a terminal device for processing the PDSCH carried by a hybrid automatic repeat request (HARQ) process according to a status of a feedback of the HARQ process.

In the present disclosure, the network device determines the first time parameter required for processing the PDSCH carried by the HARQ process according to the status of the HARQ feedback of the HARQ process. In this way, the first time parameter determined thereby is more accurate, thereby not only avoiding the impact on the HARQ due to the short processing time, but also avoiding resource waste due to the long processing time.

Optionally, determining, by the network device, the first time parameter required by the terminal device for processing the PDSCH carried by the HARQ process according to the status of the feedback of the HARQ process of the terminal device includes: in response to the feedback of the HARQ process of the terminal device being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or in response to the feedback of the HARQ process of the terminal device being disabled, determining the first time parameter required for processing the PDSCH carried by the HARQ process according to one of the first subcarrier spacing and the second subcarrier spacing.

Optionally, determining, by the network device, the first time parameter required by the terminal device for processing the PDSCH carried by the HARQ process according to the status of the feedback of the HARQ process of the terminal device includes: in response to the feedback of the HARQ process of the terminal device being enabled, determining the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or in response to the feedback of the HARQ process being disabled, determining the first time parameter required by the terminal device for processing the PDSCH carried by the HARQ process according to one of the first subcarrier spacing, the second subcarrier spacing, and a second preset subcarrier spacing.

Optionally, the first preset subcarrier spacing is any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink bandwidth part in an active status.

Optionally, the second preset subcarrier spacing is any of: a subcarrier spacing corresponding to an uplink physical channel assumed to transmit the HARQ feedback; or a subcarrier spacing corresponding to an uplink bandwidth part in an active status.

Optionally, determining, by the network device, the first time parameter required by the terminal device for processing the PDSCH carried by the HARQ process according to the status of the feedback of the HARQ process of the terminal device includes: determining candidate subcarrier spacings corresponding to the PDSCH carried by the HARQ process according to the status of the feedback of the HARQ process of the terminal device; determining second time parameters corresponding to the candidate subcarrier spacings respectively according to a preset mapping relationship between second time parameters and subcarrier spacings; determining a mapping relationship table between second time parameters and a number of symbols according to a capability of the terminal device; and determining a maximum first time parameter corresponding to the second time parameters according to a mapping relationship in the mapping relationship table.

Optionally, the method further includes: in response to the feedback of the HARQ process being enabled, determining an earliest time for transmitting the feedback of the HARQ process according to the first time parameter required for processing the PDSCH carried by the HARQ process; or in response to the feedback of the HARQ process being disabled, determining an earliest time for transmitting another PDSCH carried by the HARQ process according to the first time parameter required for processing the PDSCH carried by the HARQ process.

In a third aspect, embodiments of the present disclosure provide a communication apparatus, which is configured at a terminal device side and includes a processing module. The processing module is configured to determine a first time parameter required for processing a physical downlink shared channel (PDSCH) carried by a hybrid automatic repeat request (HARQ) process according to a status of a feedback of the HARQ process.

Optionally, the processing module is configured to: in response to the feedback of the HARQ process being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or in response to the feedback of the HARQ process being disabled, determine the first time parameter required for processing the PDSCH carried by the HARQ process according to one of the first subcarrier spacing and the second subcarrier spacing.

Optionally, the processing module is configured to: in response to the feedback of the HARQ process being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or in response to the feedback of the HARQ process being disabled, determine the first time parameter required for processing the PDSCH carried by the HARQ process according to one of the first subcarrier spacing, the second subcarrier spacing, and a second preset subcarrier spacing.

Optionally, the first preset subcarrier spacing is any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink bandwidth part in an active status.

Optionally, the second preset subcarrier spacing is any of: a subcarrier spacing corresponding to an uplink physical channel assumed to transmit the HARQ feedback; or a subcarrier spacing corresponding to an uplink bandwidth part channel in an active status.

Optionally, the processing module is configured to: determine candidate subcarrier spacings corresponding to the PDSCH carried by the HARQ process according to the status of the feedback of the HARQ process; determine second time parameters corresponding to the candidate subcarrier spacings respectively according to a preset mapping relationship between second time parameters and subcarrier spacings; determine a mapping relationship table between second time parameters and a number of symbols according to a capability of the terminal device; and determine a maximum first time parameter corresponding to the second time parameters according to a mapping relationship in the mapping relationship table.

Optionally, the processing module is further configured to: in response to the feedback of the HARQ process being enabled, determine an earliest time for transmitting the feedback of the HARQ process according to the first time parameter required for processing the PDSCH carried by the HARQ process; or in response to the feedback of the HARQ process being disabled, determine an earliest time for receiving another PDSCH carried by the HARQ process according to the first time parameter required for processing the PDSCH carried by the HARQ process.

In a fourth aspect, embodiments of the present disclosure provide a communication apparatus, which is configured at a network device side, and includes a processing module. The processing module is configured to determine a first time parameter required by a terminal device for processing a physical downlink shared channel (PDSCH) carried by a hybrid automatic repeat request (HARQ) process of the terminal device according to a status of a feedback of the HARQ process.

Optionally, the processing module is configured to: in response to the feedback of the HARQ process of the terminal device being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or in response to the feedback of the HARQ process of the terminal device being disabled, determine the first time parameter required for processing the PDSCH carried by the HARQ process according to one of the first subcarrier spacing and the second subcarrier spacing.

Optionally, the processing module is configured to: in response to the feedback of the HARQ process of the terminal device being enabled, determine the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or in response to the feedback of the HARQ process being disabled, determine the first time parameter required by the terminal device for processing the PDSCH carried by the HARQ process according to one of the first subcarrier spacing, the second subcarrier spacing, and a second preset subcarrier spacing.

Optionally, the first preset subcarrier spacing is any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink bandwidth part in an active status.

Optionally, the second preset subcarrier spacing is any of: a subcarrier spacing corresponding to an uplink physical channel assumed to transmit the HARQ feedback; or a subcarrier spacing corresponding to an uplink bandwidth part in an active status.

Optionally, the processing module is configured to: determine candidate subcarrier spacings corresponding to the PDSCH carried by the HARQ process according to the status of the feedback of the HARQ process of the terminal device; determine second time parameters corresponding to the candidate subcarrier spacings respectively according to a preset mapping relationship between second time parameters and subcarrier spacings; determine a mapping relationship table between second time parameters and a number of symbols according to a capability of the terminal device; and determine a maximum first time parameter corresponding to the second time parameters according to a mapping relationship in the mapping relationship table.

Optionally, the processing module is further configured to: in response to the feedback of the HARQ process being enabled, determine an earliest time for transmitting the feedback of the HARQ process according to the first time parameter required for processing the PDSCH carried by the HARQ process; or in response to the feedback of the HARQ process being disabled, determine an earliest time for transmitting another PDSCH carried by the HARQ process according to the first time parameter required for processing the PDSCH carried by the HARQ process.

In a fifth aspect, embodiments of the present disclosure provide a communication apparatus. The communication apparatus includes a processor, and the processor is configured to perform the method as described in the first aspect above when calling computer programs in a memory.

In a sixth aspect, embodiments of the present disclosure provide a communication apparatus. The communication apparatus includes a processor, and the processor is configured to perform the method as described in the second aspect above when calling computer programs in a memory.

In a seventh aspect, embodiments of the present disclosure provide a communication apparatus. The communication apparatus includes: a processor; and a memory having stored therein computer programs. The processor is configured to execute the computer programs stored in the memory to cause the communication apparatus to perform the method as described in the first aspect.

In an eighth aspect, embodiments of the present disclosure provide a communication apparatus. The communication apparatus includes: a processor; and a memory having stored therein computer programs. The processor is configured to execute the computer programs stored in the memory to cause the communication apparatus to perform the method as described in the second aspect.

In a ninth aspect, embodiments of the present disclosure provide a communication apparatus, which includes a processor and an interface circuit. The interface circuit is configured to receive code instructions and transmit the code instructions to the processor. The processor is configured to run the code instructions to cause the communication apparatus to perform the method as described in the first aspect.

In a tenth aspect, embodiments of the present disclosure provide a communication apparatus, which includes a processor and an interface circuit. The interface circuit is configured to receive code instructions and transmit the code instructions to the processor. The processor is configured to run the code instructions to cause the communication apparatus to perform the method as described in the first aspect.

In an eleventh aspect, embodiments of the present disclosure provide a communication system, the system includes the communication apparatus as described in the third aspect and the communication apparatus as described in the fourth aspect, or the system includes the communication apparatus as described in the fifth aspect and the communication apparatus as described in the sixth aspect, or the system includes the communication apparatus as described in the seventh aspect and the communication apparatus as described in the eighth aspect, or the system includes the communication apparatus as described in the ninth aspect and the communication apparatus as described in the tenth aspect.

In a twelfth aspect, embodiments of the present disclosure provide a computer-readable storage medium for storing instructions to be used by the above terminal device, and when the instructions are executed, the terminal device performs the method as described in the first aspect.

In a thirteenth aspect, embodiments of the present disclosure provide a readable storage medium for storing instructions to be used by the above network device, and when the instructions are executed, the network device performs the method as described in the second aspect.

In a fourteenth aspect, the present disclosure also provides a computer program product, which includes computer programs that, when run on a computer, cause the computer to perform the method as described in the first aspect.

In a fifteenth aspect, the present disclosure also provides a computer program product, which includes computer programs that, when run on a computer, cause the computer to perform the method as described in the second aspect.

In a sixteenth aspect, the present disclosure provides a chip system, which includes at least one processor and at least one interface, for supporting a terminal device to implement functions involved in the first aspect, for example, to determine or process at least one of data or information involved in the above method. In a possible design, the chip system further includes a memory for storing necessary computer programs and data of the terminal device. The chip system may consist of chips, or may include chips and other discrete devices.

In a seventeenth aspect, the present disclosure provides a chip system, which includes at least one processor and at least one interface, for supporting a network device to implement functions involved in the second aspect, for example, to determine or process at least one of data or information involved in the above method. In a possible design, the chip system further includes a memory for storing necessary computer programs and data of the network device. The chip system may consist of chips, or may include chips and other discrete devices.

In an eighteenth aspect, the present disclosure provides a computer program that, when run on a computer, causes the computer to perform the method as described in the first aspect above.

In a nineteenth aspect, the present disclosure provides a computer program that, when run on a computer, causes the computer to perform the method as described in the second aspect above.

## BRIEF DESCRIPTION OF THE DRAWINGS

In order to more clearly illustrate technical solutions involved in embodiments of the present disclosure or in the related art, drawings to be used in the description of embodiments of the present disclosure or the related art will be described below.

FIG. 1 is a schematic architecture diagram of a communication system according to embodiments of the present disclosure;

FIG. 2 is a schematic flowchart of a method for determining a processing time parameter for a physical downlink shared channel according to embodiments of the present disclosure;

FIG. 3 is a schematic flowchart of a method for determining a processing time parameter for a physical downlink shared channel according to embodiments of the present disclosure;

FIG. 4 is a schematic flowchart of a method for determining a processing time parameter for a physical downlink shared channel according to embodiments of the present disclosure;

FIG. 5 is a schematic flowchart of a method for determining a processing time parameter for a physical downlink shared channel according to embodiments of the present disclosure;

FIG. 6 is a schematic flowchart of a method for determining a processing time parameter for a physical downlink shared channel according to embodiments of the present disclosure;

FIG. 7 is a schematic flowchart of a method for determining a processing time parameter for a physical downlink shared channel according to embodiments of the present disclosure;

FIG. 8 is a schematic block diagram of a communication apparatus according to embodiments of the present disclosure;

FIG. 9 is a schematic block diagram of another communication apparatus according to embodiments of the present disclosure; and

FIG. 10 is a schematic block diagram of a chip according to embodiments of the present disclosure.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with some aspects of the present disclosure as recited in the appended claims.

For ease of understanding, terms involved in the present disclosure are introduced first.

1. Physical downlink shared channel (PDSCH)

The PDSCH is used to carry data from a transmitting channel.

2. Physical downlink control channel (PDCCH)

The PDCCH channel is used to transmit downlink control information (DCI) related to a physical uplink shared channel (PUSCH) and the physical downlink shared channel (PDSCH). The DCI information includes resource block (RB) allocation information, an HARQ process identifier, and the related contents. Only when the terminal device correctly decodes the DCI information, can it correctly process PDSCH data or the PUSCH data.

3. Hybrid automatic repeat request (HARQ)

The HARQ is a new communication technique developed based on forward error correction (FEC) and automatic repeat request (ARQ) for better anti-interference and anti-attenuation, and for improving system throughput (effectiveness) and reliability of data transmission.

4. HARQ feedback disabled

HARQ feedback disabled means that after receiving a PDSCH carried by an HARQ process identifier/HARQ process number, a receiver does not need to feed back an HARQ acknowledgment (ACK) message or an HARQ negative acknowledgement (NACK) message to a sender based on a demodulation result.

5. HARQ feedback enabled

HARQ feedback enabled means that after receiving a PDSCH carried by an HARQ process identifier/HARQ process number, a receiver needs to feed back an HARQ acknowledgment (ACK) message or an HARQ negative acknowledgement (NACK) message to a sender based on a demodulation result.

6. Bandwidth part (BWP)

Bandwidth part (BWP) is a subset of a total bandwidth, with which receiving and transmitting bandwidths of the terminal device are flexibly adjusted through bandwidth adaptation in a new radio (NR), so that the receiving and transmitting bandwidths of the terminal device do not need to be the same as the bandwidth of a cell in size. The terminal can only activate one uplink (UL) BWP and one downlink (DL) BWP at the same time, and each BWP is configured with a subcarrier spacing (SCS), and this SCS is used for all signals and channels on this BWP.

7. Subcarrier spacing (SCS)

The subcarrier spacing is inversely proportional to an orthogonal frequency division multiplexing (OFDM) symbol length. For example, when the subcarrier spacing is 15 KHz (kilohertz), the symbol length is 1/15 Khz = 66.7 microseconds (us). In the new radio (NR), a product of $2^{\mu}$ and 15 KHz is often used to represent the size of the subcarrier spacing, for example, when $\mu = 0$, SCS = 15 KHz; when $\mu = 2$, SCS = 60KHz.

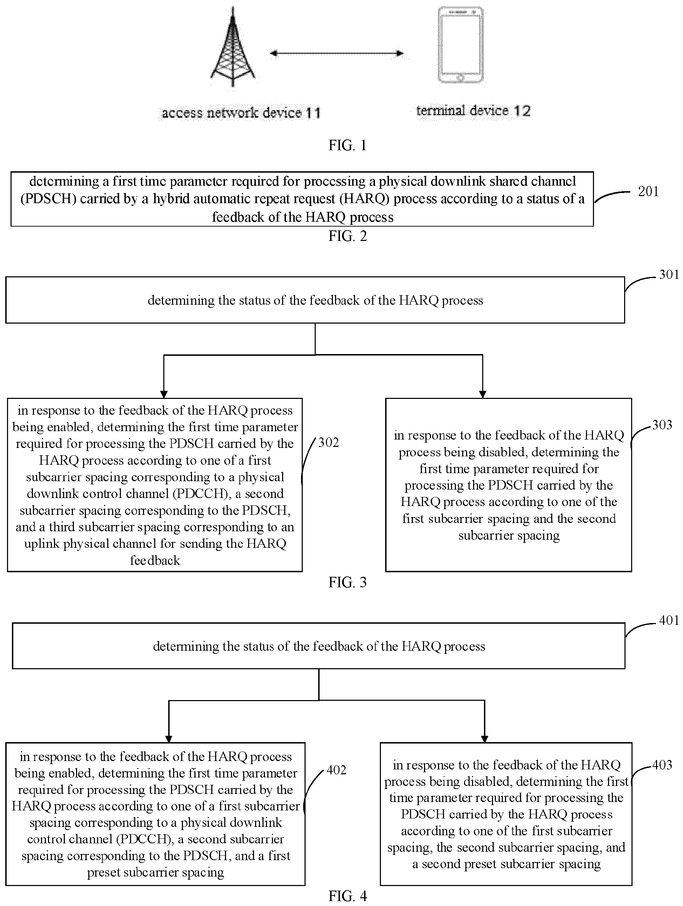

As shown in FIG. 1, FIG. 1 is a schematic architecture diagram of a communication system according to embodiments of the present disclosure. The communication system 10 may include, but not limited to, a network device and a terminal device 12. The number and form of the devices shown in FIG. 1 are only used as an example and do not constitute a limitation on embodiments of the present disclosure. The communication system may include two or more network devices and two or more terminal devices in practical applications. As an example for illustration, the communication system shown in FIG. 1 includes a network device 11 and a terminal device 12.

It should be noted that the technical solutions according to embodiments of the present disclosure may be applied to various communication systems, for example, a long term evolution (LTE) system, a 5th generation (5G) mobile communication system, a 5G new radio (NR) system, or other new mobile communication systems in the future.

The network device 11 in embodiments of the present disclosure is an entity at a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present disclosure do not limit the specific technology and specific device form adopted by the network device. The network device according to embodiments of the present disclosure may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal device 12 in embodiments of the present disclosure is an entity at a user side for receiving or transmitting signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc. Embodiments of the present disclosure do not limit the specific techniques and the specific form adopted by the terminal device.

It can be understood that the communication system described in embodiments of the present disclosure is intended to illustrate the technical solutions of embodiments of the present disclosure more clearly, and does not constitute a limitation on the technical solutions of embodiments of the present disclosure. Those of ordinary skill in the art will know that with the evolution of the system architecture and the emergence of new service scenarios, the technical solutions provided by embodiments of the present disclosure are also applicable to similar technical problems.

In a communication system, for an HARQ process with HARQ feedback enabled, after receiving a PDSCH carried by the HARQ process identifier or the HARQ process number, a terminal device needs to feed back an HARQ ACK or an HARQ NACK according to a demodulation result of the PDSCH, so the terminal device is not expected to feed back the HARQ ACK or the HARQ NACK before the demodulation of the PDSCH is completed and/or an uplink feedback is ready. For an HARQ process with HARQ feedback disabled, after receiving a PDSCH carried by the HARQ process identifier/HARQ process number, the terminal device does not need to feed back an HARQ ACK message or an HARQ NACK message according to a demodulation result to the network device, so the terminal device is not expected to receive another PDSCH carried by the HARQ process before the demodulation of the current PDSCH is completed. That is, the timing for the terminal device to feed back the demodulation result of the PDSCH or the timing for the terminal device to receive another PDSCH carried by the same HARQ process is related to a processing time or processing procedure time of the PDSCH, and the processing time of the PDSCH is determined by $T_{proc.1}$, which may be calculated according to the following formula (1):

$$T_{proc,1} = \left(N_1 + d_{1,1} + d_2\right)(2048 + 144) \cdot \kappa 2^{-\mu} \cdot T_c + T_{ext} \qquad (1),$$

where Ni is defined in the PDSCH, and its value is related to a $\mu$ value of the terminal device, and a relationship between $\mu$ and a subcarrier spacing satisfies the following formula (2); $T_{ext}$ represents an additional processing time of an unlicensed band, $d_{1,1}$ represents a processing time in a specific case where a PDSCH mapping mode is A or B, $d_2$ represents a processing time in a case where uplink signals with different priorities overlap, Tc is a basic time unit in the communication system, and k is defined in clause 4.1 of a 3GPP TS38.214 standard.

The formula (2) is as follows:

$$\mathrm{scs} = 15 * 2^{\mu} \qquad (2)$$

Generally, the subcarrier spacing may be the one of a subcarrier spacing corresponding to a PDCCH, a subcarrier spacing corresponding to a PDSCH and a subcarrier spacing corresponding to an uplink channel for transmitting the HARQ feedback message that results in the largest $T_{proc.1}$. Since in the HARQ process with the HARQ feedback disabled, the terminal device does not need to feed back the HARQ ACK message or the HARQ NACK message to the network device according to the demodulation result, that is, in the HARQ process with the HARQ feedback disabled, the subcarrier spacing corresponding to the uplink channel for transmitting the HARQ feedback message does not need to be considered, the above manner of determining $T_{proc.1}$ is not applicable to the HARQ process with the HARQ feedback disabled. Therefore, the present disclosure proposes a method for determining a time parameter for processing a PDSCH carried by an HARQ process according to a status of a feedback of the HARQ process, with which the first time parameter determined is more accurate, thereby not only avoiding the impact on the HARQ due to the short processing time, but also avoiding resource waste due to the long processing time.

In the following, a method and apparatus for determining a processing time parameter for a physical downlink shared channel provided by the present disclosure will be described in detail with reference to the accompanying drawings.

Referring to FIG. 2, which is a schematic flowchart of a method for determining a processing time parameter for a physical downlink shared channel according to embodiments of the present disclosure, the method is performed by a terminal device. As shown in FIG. 2, the method may include but not limited to a following step.

In step 201, a first time parameter required for processing the PDSCH carried by a hybrid automatic repeat request (HARQ) process is determined according to a status of a feedback of the HARQ process.

Optionally, the first time parameter may be the above $T_{proc.1}$.

In the present disclosure, considering that in a status of a feedback of different HARQ processes, corresponding considerable candidate subcarrier spacings may be different, so when determining the first time parameter $T_{proc.1}$ required for processing respective PDSCHs carried by different HARQ processes, a status of an HARQ feedback of each HARQ process may be determined first, and then candidate subcarrier spacing corresponding to the PDSCH carried by each HARQ process are determined according to an actual status of the HARQ feedback of each HARQ process, second time parameters corresponding to the candidate subcarrier spacings are determined respectively according to a preset mapping relationship between second time parameters $\mu$ and subcarrier spacings, and a maximum first time parameter corresponding to the second time parameters $\mu$ is determined according to a mapping relationship in a mapping relationship table between second time parameters and a number of symbols, and symbol lengths corresponding to the candidate subcarrier spacings respectively.

The preset mapping relationship between second time parameters and subcarrier spacings may be specified by a protocol or may be configured by the network device. Its form may be as shown in the above formula (2), or may be other forms, which is not limited in the present disclosure.

Optionally, since terminal devices have different capabilities, the mapping relationship between second time parameters and a number of symbols (Ni) corresponding to terminal devices of different capabilities may be different. In the present disclosure, after determining various second time parameters, the terminal device determines a mapping relationship table between second time parameters and the number of symbols (Ni) according to the capability of the terminal device itself, determines Ni values corresponding to the second time parameters respectively according to the mapping relationship table, and determines a maximum first time parameter corresponding to the second time parameters according to the mapping relationship between second time parameters and a number of symbols, and symbol lengths corresponding to the candidate subcarrier spacings respectively.

Optionally, when the terminal device accesses the network device, it can report its capability information to the network device, so that the network device determines the mapping relationship between second time parameters and the number of symbols (Ni) corresponding to the terminal device according to the capability information of the terminal device.

The mapping relationship between second time parameters and Ni corresponding to a case where the terminal device has a processing capability 1 and that corresponding to a case where the terminal device has a processing capability 2 can refer to Table 5.3-1 and Table 5.3-2 in the 3GPP TS38.214 standard, respectively, which will not be repeated here.

For example, for a terminal device with the processing capability 1, when a status of an HARQ feedback of an HARQ process is enabled, the HARQ process corresponds to three candidate SCSs, the terminal device is able to determine three corresponding second time parameters $\mu$ according to the mapping relationship between SCSs and second time parameters as shown in the above formula (2), and determine Ni values (the number of symbols) corresponding to the three second time parameters $\mu$ respectively by looking up the Table 5.3-1. Afterwards, the terminal device is able to calculate three time lengths corresponding to the three candidate SCSs, respectively, where the time length = the number of symbols*a length of a symbol, and the length of a symbol = 1/SCS. Then, the terminal device selects a largest time length from the three time lengths, and the Ni value corresponding to the largest time length is a finally determined Ni. Finally, the maximum first time parameter can be calculated according to the finally determined Ni and the corresponding second time parameter.

Optionally, the enabled status for the HARQ feedback of the HARQ process may be an enabled status or a notdisabled status.

It should be noted that, each HARQ process may correspond to the same or different first time parameter values in different statuses of the HARQ feedback; and different HARQ processes may correspond to the same or different first time parameters in the same status of the HARQ feedback, which are not limited in the present disclosure.

Optionally, for different statuses of the HARQ feedback of each HARQ process, different names may be specified for the number of symbols. For example, an HARQ process with HARQ feedback enabled corresponds to Ni, and an HARQ process with HARQ feedback disabled corresponds to $N_1'$, which are not limited in the present disclosure.

Optionally, for the HARQ process with HARQ feedback enabled, after determining the first time parameter required for processing the PDSCH carried by it, the terminal device is able to determine an earliest time for feeding back the HARQ process according to the first time parameter. In this way, it avoids the inaccurate feedback of the HARQ ACK message or the HARQ ACK message due to a short processing time, and also avoids waste of channel resources due to a long processing time.

Alternatively, for the HARQ process with HARQ feedback disabled, after determining the first time parameter required for processing the PDSCH carried by it, the terminal device is able to determine an earliest time for receiving another PDSCH carried by the HARQ process according to the first time parameter. In this way, it avoids the influence of the received PDSCH on the demodulation of the HARQ due to a short processing time, and also avoids waste of channel resources due to a long processing time.

In the present disclosure, the terminal device determines the first time parameter required for processing the PDSCH carried by the HARQ process according to the status of the HARQ feedback of the HARQ process. In this way, the first time parameter determined thereby is more accurate, thereby not only avoiding the impact on the HARQ due to the short processing time, but also avoiding resource waste due to the long processing time.

Referring to FIG. 3, which is a schematic flowchart of a method for determining a processing time parameter for a physical downlink shared channel according to embodiments of the present disclosure, the method is performed by a terminal device. As shown in FIG. 3, the method may include but not limited to following steps.

In step 301, the status of the feedback of the HARQ process is determined.

Optionally, the terminal device may determine a status of a current HARQ feedback according to various HARQ processes configuration information by the network device. The terminal device may receive the HARQ process configuration information via a radio resource control (RRC) message, which is not limited in the present disclosure.

In step 302, in response to the feedback of the HARQ process being enabled, the first time parameter required for processing the PDSCH carried by the HARQ process is determined according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback.

In step 303, in response to the feedback of the HARQ process being disabled, the first time parameter required for processing the PDSCH carried by the HARQ process is determined according to one of the first subcarrier spacing and the second subcarrier spacing.

In the present disclosure, when the HARQ feedback of the HARQ process is enabled, after receiving the PDSCH carried by an HARQ identifier or an HARQ process number, the terminal device needs to return an HARQ ACK message or an HARQ NACK message to the network device according to the demodulation result of the PDSCH. That is, there exists the third subcarrier spacing corresponding to the uplink physical channel for transmitting the HARQ feedback of the HARQ process. In this case, the terminal device can determine the first subcarrier spacing, the second subcarrier spacing and the third subcarrier spacing as candidate subcarrier spacings, determine a maximum first time parameter corresponding the candidate subcarrier spacings according to a relationship between SCSs and second time parameters and a relationship between second time parameters and a number of symbols (Ni) corresponding to a processing capability of the terminal device, and determine an earliest time for transmitting the HARQ feedback according to the maximum first time parameter.

When the feedback of the HARQ process is disabled, after receiving the PDSCH carried by an HARQ process identifier or an HARQ process number, the terminal device does not need to return an HARQ ACK message or an HARQ NACK message to the network device according to the demodulation result, so that the terminal device can determine the first subcarrier spacing and the second subcarrier spacing as candidate subcarrier spacings, and determine a maximum first time parameter corresponding the candidate subcarrier spacings according to a relationship between SCSs and second time parameters and a relationship between second time parameters and a number of symbols (Ni) corresponding to a processing capability of the terminal device.

The specific process for the terminal device to determine the first time parameter required for processing the PDSCH carried by the HARQ process according to the candidate subcarrier spacings corresponding to the HARQ process can refer to the detailed description of any embodiment of the present disclosure, which will not be elaborated here.

Optionally, if the feedback of the HARQ process is enabled, the terminal device may determine an earliest time for transmitting the feedback of the HARQ process according to the first time parameter required for processing the PDSCH carried by the HARQ process.

Alternatively, if the feedback of the HARQ process is disabled, the terminal device may determine an earliest time for receiving another PDSCH carried by the HARQ process according to the first time parameter required for processing the PDSCH carried by the HARQ process.

In the present disclosure, when the HARQ feedback of the HARQ process is enabled, the terminal device determines the first time parameter required for processing the PDSCH carried by the HARQ process according to one of the first subcarrier spacing corresponding to the PDCCH, the second subcarrier spacing corresponding to the PDSCH, and the third subcarrier spacing corresponding to the uplink physical channel for transmitting the HARQ feedback; while when the feedback of the HARQ process is disabled, the terminal device determines the first time parameter required for processing the PDSCH carried by the HARQ process according to the first subcarrier spacing and the second subcarrier spacing. Therefore, when the HARQ feedback of the HARQ process is in different status, the first time parameter is determined according to different subcarrier spacings, so that the first time parameter determined thereby is more accurate, thereby not only avoiding the impact on the HARQ due to the short processing time, but also avoiding resource waste due to the long processing time.

Referring to FIG. 4, which is a schematic flowchart of a method for determining a processing time parameter for a physical downlink shared channel according to embodiments of the present disclosure, the method is performed by a terminal device. As shown in FIG. 4, the method may include but not limited to following steps.

In step 401, the status of the feedback of the HARQ process is determined.

In step 402, in response to the HARQ feedback being enabled, the first time parameter required for processing the PDSCH is determined according to one of a first subcarrier spacing corresponding to a physical downlink control channel (PDCCH), a second subcarrier spacing corresponding to the PDSCH, and a first preset subcarrier spacing.

In step 403, in response to the HARQ feedback being disabled, the first time parameter required for processing the PDSCH is determined according to one of the first subcarrier spacing, the second subcarrier spacing, and a second preset subcarrier spacing.

Optionally, the first preset subcarrier spacing may be any of: a subcarrier spacing corresponding to an uplink physical channel for transmitting the HARQ feedback; a subcarrier spacing corresponding to an uplink physical channel assumed to transmit the HARQ feedback (also referred to as an uplink physical channel capable of transmitting the HARQ feedback); or a subcarrier spacing corresponding to an uplink (UL) bandwidth part (BWP) in an active status.

The uplink physical channel assumed to transmit the HARQ feedback may be any uplink physical channel corresponding to the terminal device, which may be configured to transmit the HARQ feedback when needed.

In addition, the terminal device may correspond to multiple UL BWPs. In the present disclosure, an SCS corresponding to a UL BWP currently in an active status and corresponding to the terminal device may be determined as the first preset SCS.

Optionally, the second preset SCS may be any of: a subcarrier spacing corresponding to an uplink physical channel assumed to transmit the HARQ feedback (also referred to as an uplink physical channel capable of transmitting the HARQ feedback); or a subcarrier spacing corresponding to an uplink bandwidth part in an active status.

For example, when determining the candidate subcarrier spacings, if the terminal device determines that the feedback of the HARQ process is enabled, the terminal device determines the first subcarrier spacing corresponding to the PDCCH, the second subcarrier spacing corresponding to the PDSCH, and the subcarrier spacing corresponding to the uplink physical channel for transmitting the HARQ feedback as the candidate subcarrier spacings; while if the terminal device determines that the feedback of the HARQ process is disabled, the terminal device determines the first subcarrier spacing, the second subcarrier spacing and a fifth subcarrier spacing corresponding to an uplink physical channel assumed to transmit the HARQ feedback as the candidate subcarrier spacings. Further, the maximum first time parameter is determined according to the mapping relationship between subcarrier spacings and second time parameters and the mapping relationship between second time parameters and the number of symbols.

Alternatively, when the feedback of the HARQ process is enabled, the terminal device determines the first subcarrier spacing, the second subcarrier spacing, and the subcarrier spacing corresponding to the uplink physical channel for transmitting the HARQ feedback as the candidate subcarrier spacings; while if determining that the feedback of the HARQ process is disabled, the terminal device determines the first subcarrier spacing, the second subcarrier spacing, and the subcarrier spacing corresponding to the uplink bandwidth part in the active status as the candidate subcarrier spacings. Further, the maximum first time parameter is determined according to the mapping relationship between subcarrier spacings and second time parameters and the mapping relationship between second time parameters and the number of symbols.

Alternatively, regardless of whether the feedback of the HARQ process is enabled or disabled, the terminal device determines the first subcarrier spacing, the second subcarrier spacing, and the subcarrier spacing of the uplink physical channel assumed to transmit the HARQ feedback corresponding to the HARQ process as the candidate subcarrier spacings. Further, the maximum first time parameter is determined according to the mapping relationship between subcarrier spacings and second time parameters and the mapping relationship between second time parameters and the number of symbols.

Alternatively, regardless of whether the feedback of the HARQ process is enabled or disabled, the terminal device determines the first subcarrier spacing, the second subcarrier spacing, and the subcarrier spacing corresponding to the uplink bandwidth part in the active status corresponding to the HARQ process as the candidate subcarrier spacings. Further, the maximum first time parameter is determined according to the mapping relationship between subcarrier spacings and second time parameters and the mapping relationship between second time parameters and the number of symbols.

The process for the terminal device to determine the maximum first time parameter according to the mapping relationship between subcarrier spacings and second time parameters and the mapping relationship between second time parameters and the number of symbols ($N_i$) can refer to the detailed description of any embodiment of the present disclosure, which will not be elaborated here.

Optionally, if the feedback of the HARQ process is enabled, the terminal device determines an earliest time for transmitting the feedback of the HARQ process according to the first time parameter required for processing the PDSCH carried by the HARQ process.

Alternatively, if the feedback of the HARQ process is disabled, the terminal device determines an earliest time for receiving another PDSCH carried by the HARQ process according to the first time parameter required for processing the PDSCH carried by the HARQ process.

In the present disclosure, when the feedback of the HARQ process is enabled, the terminal device determines the first time parameter required for processing the PDSCH carried by the HARQ process according to one of the first subcarrier spacing corresponding to the PDCCH, the second subcarrier spacing corresponding to the PDSCH and the first preset subcarrier spacing; while when the feedback of the HARQ process is disabled, the terminal device determines the first time parameter required for processing the PDSCH carried by the HARQ process according to one of the first subcarrier spacing, the second subcarrier spacing and the second preset subcarrier spacing. In this way, when the HARQ feedback of the HARQ process is in different status, the first time parameter is determined according to the corresponding candidate subcarrier spacings, so that the first time parameter determined thereby is more accurate, thereby not only avoiding the impact on the HARQ due to the short processing time, but also avoiding resource waste due to the long processing time.

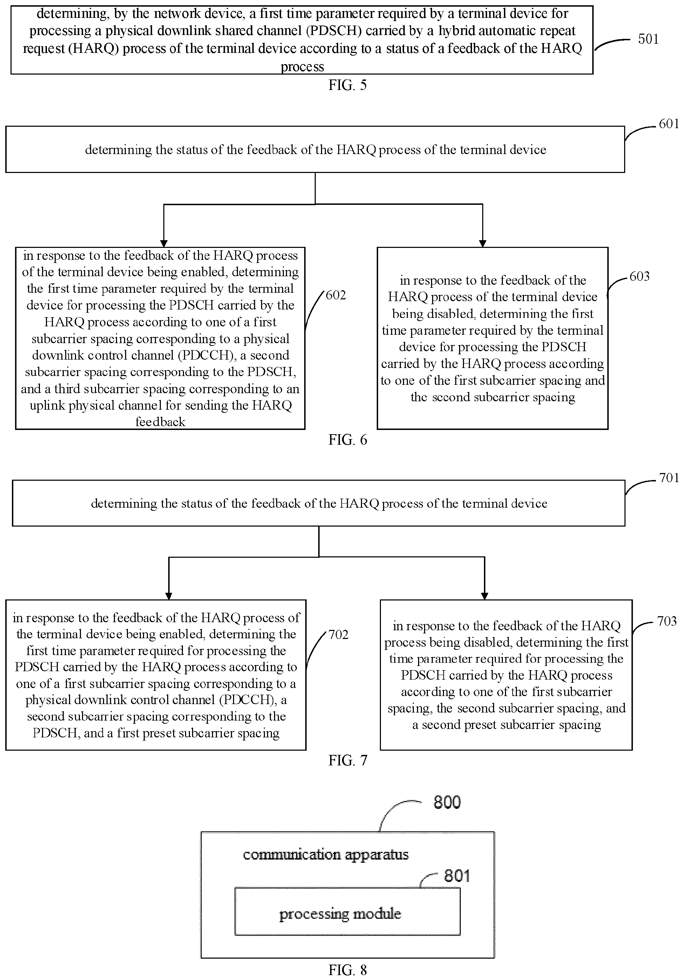

Referring to FIG. 5, which is a schematic flowchart of a method for determining a processing time parameter for a physical downlink shared channel according to embodiments of the present disclosure, the method is performed by a network device. As shown in FIG. 5, the method may include but not limited to a following step.

In step 501, the network device determines a first time parameter required by a terminal device for processing a physical downlink shared channel (PDSCH) carried by a hybrid automatic repeat request (HARQ) process of a terminal device according to a status of a feedback of the HARQ process of the terminal device.

Optionally, the first time parameter may be the above $T_{proc.1}$.

In the present disclosure, considering that in a status of a feedback of different HARQ processes, corresponding considerable candidate subcarrier spacings may be different, so when the network device determines the first time parameter $T_{proc.1}$ required by the terminal device for processing respective PDSCHs carried by different HARQ processes, a status of an HARQ feedback of each HARQ process may be determined first, and then candidate subcarrier spacing corresponding to the PDSCH carried by each HARQ process are determined according to an actual status of the HARQ feedback of each HARQ process, second time parameters corresponding to the candidate subcarrier spacings are determined respectively according to a preset mapping relationship between second time parameters $\mu$ and subcarrier spacings, and a maximum first time parameter corresponding to the second time parameters $\mu$ is determined according to a mapping relationship in a mapping relationship table between second time parameters and a number of symbols and symbol lengths corresponding to the candidate subcarrier spacings respectively.

The preset mapping relationship between second time parameters and subcarrier spacings may be specified by a protocol or may be configured by the network device. Its form may be as shown in the above formula (2), or may be other forms, which is not limited in the present disclosure.

Optionally, since terminal devices have different capabilities, the mapping relationship between second time parameters and a number of symbols (Ni) corresponding to terminal devices of different capabilities may be different. In the present disclosure, after determining various second time parameters, the network device determines a mapping relationship table between second time parameters and Ni according to the capability of the terminal device, determines Ni values corresponding to the second time parameters respectively according to the mapping relationship table, and determines a maximum first time parameter corresponding to the second time parameters according to the mapping relationship between second time parameters and a number of symbols, and symbol lengths corresponding to the candidate subcarrier spacings respectively.

Optionally, when the terminal device accesses the network device, it can report its capability information to the network device, so that the network device determines the mapping relationship between second time parameters and Ni corresponding to the terminal device according to the capability information of the terminal device.

The mapping relationship between second time parameters and Ni corresponding to a case where the terminal device has a processing capability 1 and that corresponding to a case where the terminal device has a processing capability 2 can refer to Table 5.3-1 and Table 5.3-2 in the 3GPP TS38.214 standard, respectively, which will not be repeated here.

For example, for a terminal device with the processing capability 1, when a status of an HARQ feedback of an HARQ process is enabled, the HARQ process corresponds to three candidate SCSs, the network device is able to determine three corresponding second time parameters $\mu$ according to the mapping relationship between SCSs and second time parameters as shown in the above formula (2), and then the terminal device is able to determine Ni values (the number of symbols) corresponding to the three second time parameters $\mu$ respectively by looking up the Table 5.3-1. Afterwards, the network device is able to calculate three time lengths corresponding to the three candidate SCSs, respectively, where the time length = the number of symbols*a length of a symbol, and the length of a symbol = 1/SCS. Then, the network device selects a largest time length from the three time lengths, and the Ni value corresponding to the largest time length is a finally determined $N_1$. Finally, the maximum first time parameter can be calculated according to the finally determined $N_1$ and the corresponding second time parameter.

Optionally, the enabled status for the HARQ feedback of the HARQ process may be an enabled status or a notdisabled status.

It should be noted that, each HARQ process may correspond to the same or different first time parameter values in different statuses of the HARQ feedback; and different HARQ processes may correspond to the same or different first time parameters in the same status of the HARQ feedback, which are not limited in the present disclosure.

Optionally, for different statuses of the HARQ feedback of each HARQ process, different names may be specified for the number of symbols. For example, an HARQ process with HARQ feedback enabled corresponds to Ni, and an HARQ process with HARQ feedback disabled corresponds to $N_1$', which are not limited in the present disclosure.

Optionally, for the HARQ process with HARQ feedback enabled, after determining the first time parameter required by the terminal device for processing the PDSCH carried by it, the network device is able to determine an earliest time for the terminal device to feed back the HARQ process according to the first time parameter. In this way, it avoids that the feedback message cannot be obtained due to a short processing time, and also avoids waste of channel resources due to a long processing time.

Alternatively, for the HARQ process with HARQ feedback disabled, after determining the first time parameter required by the terminal device for processing the PDSCH carried by it, the network device is able to determine an earliest time for transmitting another PDSCH carried by the HARQ process according to the first time parameter. In this way, it avoids the influence of the transmitted PDSCH on the demodulation of the HARQ due to a short processing time, and also avoids waste of channel resources due to a long processing time.

In the present disclosure, the network device determines the first time parameter required for processing the PDSCH carried by the HARQ process according to the status of the HARQ feedback of the HARQ process. In this way, the first time parameter determined thereby is more accurate, thereby not only avoiding the impact on the HARQ due to the short processing time, but also avoiding resource waste due to the long processing time.

Referring to FIG. 6, which is a schematic flowchart of a method for determining a processing time parameter for a physical downlink shared channel according to embodiments of the present disclosure, the method is performed by a network device. As shown in FIG. 6, the method may include but not limited to following steps.

In step 601, the status of the feedback of the HARQ process of the terminal device is determined.

Optionally, the status of the HARQ feedback of the terminal device may be indicated by the network device. The network device may indicate the HARQ process configuration information via a radio resource control (RRC) message, which is not limited in the present disclosure.

In step 602, in response to the feedback of the HARQ process of the terminal device being enabled, the first time parameter required by the terminal device for processing the PDSCH carried by the HARQ process is determined according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback.

In step 603, in response to the feedback of the HARQ process being disabled, the first time parameter required by the terminal device for processing the PDSCH carried by the HARQ process is determined according to one of the first subcarrier spacing and the second subcarrier spacing.

In the present disclosure, when the HARQ feedback of the HARQ process is enabled, after receiving the PDSCH carried by an HARQ identifier or an HARQ process number, the terminal device needs to return an HARQ ACK message or an HARQ NACK message to the network device according to the demodulation result of the PDSCH. That is, there exists the third subcarrier spacing corresponding to the uplink physical channel for transmitting the HARQ feedback of the HARQ process. In this case, the network device can determine the first subcarrier spacing, the second subcarrier spacing and the third subcarrier spacing as candidate subcarrier spacings, determine a maximum first time parameter corresponding the candidate subcarrier spacings according to a relationship between SCSs and second time parameters and a relationship between second time parameters and a number of symbols (Ni) corresponding to a processing capability of the terminal device, and determine an earliest time for transmitting the HARQ feedback according to the maximum first time parameter.

When the feedback of the HARQ process is disabled, after receiving the PDSCH carried by an HARQ process identifier or an HARQ process number, the terminal device does not need to return an HARQ ACK message or an HARQ NACK message to the network device according to the demodulation result, so that the network device can determine the first subcarrier spacing and the second subcarrier spacing as candidate subcarrier spacings, and determine a maximum first time parameter corresponding the candidate subcarrier spacings according to a relationship between SCSs and second time parameters and a relationship between second time parameters and a number of symbols (Ni) corresponding to a processing capability of the terminal device.

The specific process for the network device to determine the first time parameter required for processing the PDSCH carried by the HARQ process according to the candidate subcarrier spacings corresponding to the PDSCH carried by the HARQ process can refer to the detailed description of any embodiment of the present disclosure, which will not be elaborated here.

Optionally, if the feedback of the HARQ process is enabled, the network device determines an earliest time for receiving the feedback of the HARQ process according to the first time parameter required by the terminal device for processing the PDSCH carried by the HARQ process.

Alternatively, if the feedback of the HARQ process is disabled, the network device determines an earliest time for transmitting another PDSCH carried by the HARQ process according to the first time parameter required by the terminal device for processing the PDSCH carried by the HARQ process.

In the present disclosure, when the HARQ feedback of the HARQ process of the terminal device is enabled, the network device determines the first time parameter required by the terminal device for processing the PDSCH carried by the HARQ process according to one of the first subcarrier spacing corresponding to the PDCCH, the second subcarrier spacing corresponding to the PDSCH, and the third subcarrier spacing corresponding to the uplink physical channel for transmitting the HARQ feedback; while when the feedback of the HARQ process is disabled, the network device determines the first time parameter required by the terminal device for processing the PDSCH carried by the HARQ process according to the first subcarrier spacing and the second subcarrier spacing. Therefore, when the HARQ feedback of the HARQ process is in different status, the first time parameter is determined according to different subcarrier spacings, so that the first time parameter determined thereby is more accurate, thereby not only avoiding the impact on the HARQ due to the short processing time, but also avoiding resource waste due to the long processing time.

Referring to FIG. 7, which is a schematic flowchart of a method for determining a processing time parameter for a physical downlink shared channel according to embodiments of the present disclosure, the method is performed by a network device. As shown in FIG. 7, the method may include but not limited to following steps.

In step 701, the status of the feedback of the HARQ process of the terminal device is determined.

In step 702, in response to the HARQ feedback of the terminal device being enabled, the first time parameter required for processing the PDSCH carried by the HARQ is determined according to one of a first subcarrier spacing corresponding to a physical downlink control channel

(PDCCH), a second subcarrier spacing corresponding to the PDSCH, and a first preset subcarrier spacing.

In step 703, in response to the HARQ feedback being disabled, the first time parameter required for processing the PDSCH is determined according to one of the first subcarrier spacing, the second subcarrier spacing, and a second preset subcarrier spacing.

Optionally, the first preset subcarrier spacing may be any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink (UL) bandwidth part (BWP) in an active status.

The uplink physical channel assumed to transmit the HARQ feedback may be any uplink physical channel corresponding to the terminal device, which may be configured to transmit the HARQ feedback when needed.

In addition, the terminal device may correspond to multiple UL BWPs. In the present disclosure, an SCS corresponding to a UL BWP currently in an active status and corresponding to the terminal device may be determined as the first preset SCS.

Optionally, the second preset SCS may be any of: a subcarrier spacing corresponding to an uplink physical channel assumed to transmit the HARQ feedback; or a subcarrier spacing corresponding to an uplink bandwidth part in an active status.

For example, when the network device determines the candidate subcarrier spacings corresponding to the HARQ process, if the network device determines that the feedback of the HARQ process is enabled, the network device determines the first subcarrier spacing corresponding to the PDCCH, the second subcarrier spacing corresponding to the PDSCH, and the subcarrier spacing corresponding to the uplink physical channel for transmitting the HARQ feedback as the candidate subcarrier spacings; while if the network device determines that the feedback of the HARQ process is disabled, the network device determines the first subcarrier spacing, the second subcarrier spacing and a fifth subcarrier spacing corresponding to an uplink physical channel assumed to transmit the HARQ feedback as the candidate subcarrier spacings. Further, the maximum first time parameter is determined according to the mapping relationship between subcarrier spacings and second time parameters and the mapping relationship between second time parameters and the number of symbols.

Alternatively, when the network device determines that the feedback of the HARQ process of the terminal device is enabled, the network device determines the first subcarrier spacing, the second subcarrier spacing, and the subcarrier spacing corresponding to the uplink physical channel for transmitting the HARQ feedback as the candidate subcarrier spacings; while if determining that the feedback of the HARQ process is disabled, the network device determines the first subcarrier spacing, the second subcarrier spacing, and the subcarrier spacing corresponding to the uplink bandwidth part in the active status as the candidate subcarrier spacings. Further, the maximum first time parameter is determined according to the mapping relationship between subcarrier spacings and second time parameters and the mapping relationship between second time parameters and the number of symbols.

Alternatively, regardless of whether the feedback of the HARQ process of the terminal device is enabled or disabled, the network device determines the first subcarrier spacing, the second subcarrier spacing, and the subcarrier spacing of the uplink physical channel assumed to transmit the HARQ feedback corresponding to the HARQ process as the candidate subcarrier spacings. Further, the maximum first time parameter is determined according to the mapping relationship between subcarrier spacings and second time parameters and the mapping relationship between second time parameters and the number of symbols.

Alternatively, regardless of whether the feedback of the HARQ process of the terminal device is enabled or disabled, the network device determines the first subcarrier spacing, the second subcarrier spacing, and the subcarrier spacing corresponding to the uplink bandwidth part in the active status corresponding to the HARQ process as the candidate subcarrier spacings. Further, the maximum first time parameter is determined according to the mapping relationship between subcarrier spacings and second time parameters and the mapping relationship between second time parameters and the number of symbols.

The process for the network device to determine the maximum first time parameter according to the mapping relationship between subcarrier spacings and second time parameters and the mapping relationship between second time parameters and the number of symbols (Ni) can refer to the detailed description of any embodiment of the present disclosure, which will not be elaborated here.

Optionally, if the feedback of the HARQ process of the terminal device is enabled, the network device determines an earliest time for receiving the feedback of the HARQ process according to the first time parameter required by the terminal device for processing the PDSCH carried by the HARQ process.

Alternatively, if the feedback of the HARQ process of the terminal device is disabled, the network device determines an earliest time for transmitting another PDSCH carried by the HARQ process according to the first time parameter required by the terminal device for processing the PDSCH carried by the HARQ process.

In the present disclosure, when the network device determines the feedback of the HARQ process of the terminal device is enabled, the network device determines the first time parameter required by the terminal device for processing the PDSCH carried by the HARQ process according to one of the first subcarrier spacing corresponding to the PDCCH, the second subcarrier spacing corresponding to the PDSCH and the first preset subcarrier spacing; while when the feedback of the HARQ process is disabled, the network device determines the first time parameter required by the terminal device for processing the PDSCH carried by the HARQ process according to one of the first subcarrier spacing, the second subcarrier spacing and the second preset subcarrier spacing. In this way, when the HARQ feedback of the HARQ process is in different status, the first time parameter is determined according to the corresponding candidate subcarrier spacings, so that the first time parameter determined thereby is more accurate, thereby not only avoiding the impact on the HARQ due to the short processing time, but also avoiding resource waste due to the long processing time.

Referring to FIG. 8, which is a schematic block diagram of a communication apparatus 800 according to embodiments of the present disclosure, the communication apparatus 800 shown in FIG. 8 may include a processing module 801.

It can be understood that the communication apparatus 800 may be a terminal device, an apparatus in the terminal device, or an apparatus that can be matched with the terminal device to use.

The communication apparatus 800 is configured at the terminal device side.

The processing module 801 is configured to determine a first time parameter required for processing a physical downlink shared channel (PDSCH) carried by a hybrid automatic repeat request (HARQ) process according to a status of a feedback of the HARQ process.

Optionally, the processing module 801 is configured to: in response to the feedback of the HARQ process being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or in response to the feedback of the HARQ process being disabled, determine the first time parameter required for processing the PDSCH carried by the HARQ process according to one of the first subcarrier spacing and the second subcarrier spacing.

Optionally, the processing module 801 is configured to: in response to the feedback of the HARQ process being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or in response to the feedback of the HARQ process being disabled, determine the first time parameter required for processing the PDSCH carried by the HARQ process according to one of the first subcarrier spacing, the second subcarrier spacing, and a second preset subcarrier spacing.

Optionally, the first preset subcarrier spacing is any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink bandwidth part in an active status.

Optionally, the second preset subcarrier spacing is any of: a subcarrier spacing corresponding to an uplink physical channel assumed to transmit the HARQ feedback; or a subcarrier spacing corresponding to an uplink bandwidth part channel in an active status.

Optionally, the processing module 801 is configured to: determine candidate subcarrier spacings corresponding to the PDSCH carried by the HARQ process according to the status of the feedback of the HARQ process; determine second time parameters corresponding to the candidate subcarrier spacings respectively according to a preset mapping relationship between second time parameters and subcarrier spacings; determine a mapping relationship table between second time parameters and a number of symbols according to a capability of the terminal device; and determine a maximum first time parameter corresponding to the second time parameters according to a mapping relationship in the mapping relationship table.

Optionally, the processing module 801 is further configured to: in response to the feedback of the HARQ process being enabled, determine an earliest time for transmitting the feedback of the HARQ process according to the first time parameter required for processing the PDSCH carried by the HARQ process; or in response to the feedback of the HARQ process being disabled, determine an earliest time for receiving another PDSCH carried by the HARQ process according to the first time parameter required for processing the PDSCH carried by the HARQ process.

The communication apparatus provide in the present disclosure is able to determine the first time parameter required for processing the PDSCH carried by the HARQ process according to the status of the feedback of the HARQ process. In this way, the first time parameter determined thereby is more accurate, thereby not only avoiding the impact on the HARQ due to the short processing time, but also avoiding resource waste due to the long processing time.

It can be understood that the communication apparatus 800 may be a network device, an apparatus in the network device, or an apparatus that can be matched with the network device to use.

The communication apparatus 800 is configured at the network device side, and includes a processing module 801.

The processing module 801 is configured to determine a first time parameter required by a terminal device for processing a physical downlink shared channel (PDSCH) carried by a hybrid automatic repeat request (HARQ) process of the terminal device according to a status of a feedback of the HARQ process.

Optionally, the processing module 801 is configured to: in response to the feedback of the HARQ process of the terminal device being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or in response to the feedback of the HARQ process of the terminal device being disabled, determine the first time parameter required for processing the PDSCH carried by the HARQ process according to one of the first subcarrier spacing and the second subcarrier spacing.

Optionally, the processing module 801 is configured to: in response to the feedback of the HARQ process of the terminal device being enabled, determine the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or in response to the feedback of the HARQ process being disabled, determine the first time parameter required by the terminal device for processing the PDSCH carried by the HARQ process according to one of the first subcarrier spacing, the second subcarrier spacing, and a second preset subcarrier spacing.

Optionally, the first preset subcarrier spacing is any of: a subcarrier spacing corresponding to an uplink physical channel for transmitting the HARQ feedback; a subcarrier spacing corresponding to an uplink physical channel assumed to transmit the HARQ feedback; or a subcarrier spacing corresponding to an uplink bandwidth part in an active status.

Optionally, the second preset subcarrier spacing is any of: a subcarrier spacing corresponding to an uplink physical channel assumed to transmit the HARQ feedback; or a subcarrier spacing corresponding to an uplink bandwidth part in an active status.

Optionally, the processing module 801 is configured to: determine candidate subcarrier spacings corresponding to the PDSCH carried by the HARQ process according to the status of the feedback of the HARQ process of the terminal device; determine second time parameters corresponding to the candidate subcarrier spacings respectively according to a preset mapping relationship between second time parameters and subcarrier spacings; determine a mapping relationship table between second time parameters and a number of symbols according to a capability of the terminal device; and determine a maximum first time parameter corresponding to the second time parameters according to a mapping relationship in the mapping relationship table.

Optionally, the processing module 801 is further configured to: in response to the feedback of the HARQ process being enabled, determine an earliest time for transmitting the feedback of the HARQ process according to the first time parameter required for processing the PDSCH carried by the HARQ process; or in response to the feedback of the HARQ process being disabled, determine an earliest time for transmitting another PDSCH carried by the HARQ process according to the first time parameter required for processing the PDSCH carried by the HARQ process.

The communication apparatus provide in the present disclosure is able to determine the first time parameter required by the terminal device for processing the PDSCH carried by the HARQ process according to the status of the feedback of the HARQ process of the terminal device. In this way, the first time parameter determined thereby is more accurate, thereby not only avoiding the impact on the HARQ due to the short processing time, but also avoiding resource waste due to the long processing time.

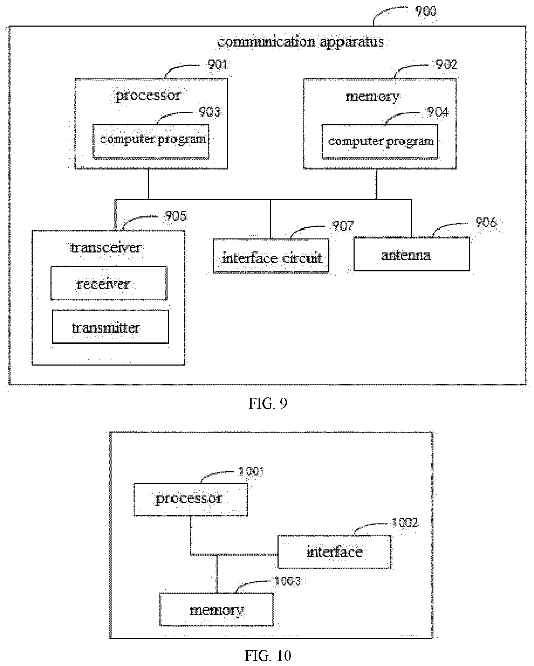

Referring to FIG. 9, FIG. 9 is a schematic block diagram of another communication apparatus 900 according to embodiments of the present disclosure. The communication apparatus 900 may be a network device, may also be a terminal device, may also be a chip, a chip system, or a processor that supports the network device to implement the above method, or may also be a chip, a chip system, or a processor that supports the terminal device to implement the above method. The apparatus may be used to implement the methods as described in the above method embodiments, and for details, reference may be made to the descriptions on the above method embodiments.

The communication apparatus 900 may include one or more processors 901. The processor 901 may be a general-purpose processor or a special-purpose processor. For example, it may be a baseband processor or a central processing unit. The baseband processor may be configured to process a communication protocol and communication data, and the central processing unit may be configured to control a communication apparatus (such as a base station, a baseband chip, a terminal device, a terminal device chip, a DU or a CU, etc.), execute computer programs, and process data of computer programs.

Optionally, the communication apparatus 900 may further include one or more memories 902 that may have stored therein a computer program 904. The processor 901 executes the computer program 904 to cause the communication apparatus 900 to implement the methods as described in the above method embodiments. Optionally, the memory 902 may have stored therein data. The communication apparatus 900 and the memory 902 may be set separately or integrated together.

Optionally, the communication apparatus 900 may further include a transceiver 905 and an antenna 906. The transceiver 905 may be called a transceiving element, a transceiving machine, a transceiving circuit or the like, for implementing a transceiving function. The transceiver 905 may include a receiver and a transmitter. The receiver may be called a receiving machine, a receiving circuit or the like, for implementing a receiving function. The transmitter may be called a transmitting machine, a transmitting circuit or the like for implementing a transmitting function.

Optionally, the communication apparatus 900 may further include one or more interface circuits 907. The interface circuit 907 is configured to receive a code instruction and transmit the code instruction to the processor 901. The processor 901 runs the code instruction to enable the communication apparatus 900 to execute the methods as described in the foregoing method embodiments.

The communication apparatus 900 is the terminal device: the processor 901 is configured to execute the step 201 in FIG. 2, the steps 301-303 in FIG. 3, the steps 401-403 in FIG. 3 in FIG. 4.

The communication apparatus 900 is the network device: the processor 901 is configured to execute the step 501 in FIG. 5, the steps 601-603 in FIG. 6, the steps 701-703 in FIG. 3 in FIG. 7.

In an implementation manner, the processor 901 may include the transceiver configured to implement receiving and transmitting functions. For example, the transceiver may be a transceiving circuit, an interface, or an interface circuit. The transceiving circuit, the interface or the interface circuit configured to implement the receiving and transmitting functions may be separated or may be integrated together. The above transceiving circuit, interface or interface circuit may be configured to read and write codes/data, or the above transceiving circuit, interface or interface circuit may be configured to transmit or transfer signals.

In an implementation manner, the processor 901 may have stored therein a computer program 903 that, when run on the processor 901, causes the communication apparatus 900 to implement the method as described in the foregoing method embodiments. The computer program 903 may be solidified in the processor 901, and in this case, the processor 901 may be implemented by a hardware.

In an implementation manner, the communication apparatus 900 may include a circuit, and the circuit may implement the transmitting, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be the network device or the terminal device, but the scope of the communication apparatus described in the present disclosure is not limited thereto, and a structure of the communication apparatus is not limited by FIG. 9. The communication apparatus may be a stand-alone device or may be a part of a larger device. For example, the communication apparatus may be:

(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

For the case where the communication apparatus may be a chip or a chip system, reference may be made to a schematic structural diagram of the chip shown in FIG. 10. The chip shown in FIG. 10 includes a processor 1001 and an interface 1002. In the chip, one or more processors 1001 may be provided, and more than one interface 1002 may be provided.

Optionally, the chip further includes a memory 1003 for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present disclosure.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

It can be understood that the phrase "a plurality of' in the present disclosure refers to two or more, and other quantifiers are similar thereto. The term "and/or" describes an association relationship of associated objects, indicating that three relationships may exist, for example, the expression "A and/or B" may include the following three cases: A alone, B alone, and both A and B. The character "/" generally indicates an "or" relationship of the associated objects. The singular forms "a/an", "said" and "the" are intended to include plural forms, unless clearly indicated in the context otherwise.

It can be further understood that, although operations in some embodiments of the present disclosure are described in a specific order in the drawings, it should not be understood as requiring these operations to be performed in the specific order or in the serial order as shown, or requiring all the shown operations to be performed to get the desired result. In certain circumstances, multitasking and parallel processing may be advantageous.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of' may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, apparatus and unit may refer to the corresponding process in the foregoing method embodiments, which will not be repeated here.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

**Claims**

1. A method for determining a processing time parameter for a physical downlink shared channel (PDSCH), performed by a terminal device, comprising:
   determining a first time parameter required for processing the PDSCH carried by a hybrid automatic repeat request (HARQ) process according to a status of a feedback of the HARQ process.

2. The method according to claim 1, wherein determining the first time parameter required for processing the PDSCH carried by the HARQ process according to the status of the feedback of the HARQ process comprises:

   in response to the feedback of the HARQ process being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or
   in response to the feedback of the HARQ process being disabled, determining the first time parameter required for processing the PDSCH carried by the HARQ process according to one of the first subcarrier spacing and the second subcarrier spacing.

3. The method according to claim 1, wherein determining the first time parameter required for processing the PDSCH carried by the HARQ process according to the status of the feedback of the HARQ process comprises:

   in response to the feedback of the HARQ process being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or
   in response to the feedback of the HARQ process being disabled, determining the first time parameter required for processing the PDSCH carried by the HARQ process according to one of the first subcarrier spacing, the second subcarrier spacing, and a second preset subcarrier spacing.

4. The method according to claim 3, wherein the first preset subcarrier spacing is any of:

   a subcarrier spacing corresponding to an uplink physical channel for transmitting the HARQ feedback;
   a subcarrier spacing corresponding to an uplink physical channel assumed to transmit the HARQ feedback; or
   a subcarrier spacing corresponding to an uplink bandwidth part in an active status.

5. The method according to claim 3, wherein the second preset subcarrier spacing is any of:

   a subcarrier spacing corresponding to an uplink physical channel assumed to transmit the HARQ feedback; or
   a subcarrier spacing corresponding to an uplink bandwidth part channel in an active status.

6. The method according to any one of claims 1-5, wherein determining the first time parameter required for processing the PDSCH carried by the HARQ process according to the status of the feedback of the HARQ process comprises:

   determining candidate subcarrier spacings corresponding to the PDSCH carried by the HARQ process according to the status of the feedback of the HARQ process;
   determining second time parameters corresponding to the candidate subcarrier spacings respectively according to a preset mapping relationship between second time parameters and subcarrier spacings;
   determining a mapping relationship table between second time parameters and a number of symbols according to a capability of the terminal device; and

determining a maximum first time parameter corresponding to the second time parameters according to a mapping relationship in the mapping relationship table.

7. The method according to any one of claims 1-6, further comprising:

in response to the feedback of the HARQ process being enabled, determining an earliest time for transmitting the feedback of the HARQ process according to the first time parameter required for processing the PDSCH carried by the HARQ process; or

in response to the feedback of the HARQ process being disabled, determining an earliest time for receiving another PDSCH carried by the HARQ process according to the first time parameter required for processing the PDSCH carried by the HARQ process.

8. A method for determining a processing time parameter for a physical downlink shared channel (PDSCH), performed by a network device, comprising:

determining, by the network device, a first time parameter required by a terminal device for processing the PDSCH carried by a hybrid automatic repeat request (HARQ) process according to a status of a feedback of the HARQ process of the terminal device.

9. The method according to claim 8, wherein determining, by the network device, the first time parameter required by the terminal device for processing the PDSCH carried by the HARQ process according to the status of the feedback of the HARQ process of the terminal device comprises:

in response to the feedback of the HARQ process of the terminal device being enabled, determining the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or

in response to the feedback of the HARQ process of the terminal device being disabled, determining the first time parameter required by the terminal device for processing the PDSCH carried by the HARQ process according to one of the first subcarrier spacing and the second subcarrier spacing.

10. The method according to claim 8, wherein determining, by the network device, the first time parameter required by the terminal device for processing the PDSCH carried by the HARQ process according to the status of the feedback of the HARQ process of the terminal device comprises:

in response to the feedback of the HARQ process of the terminal device being enabled, determining the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or

in response to the feedback of the HARQ process of the terminal device being disabled, determining the first time parameter required by the terminal device for processing the PDSCH carried by the HARQ process according to one of the first subcarrier spacing, the second subcarrier spacing, and a second preset subcarrier spacing.

11. The method according to claim 10, wherein the first preset subcarrier spacing is any of:

a subcarrier spacing corresponding to an uplink physical channel for transmitting the HARQ feedback;

a subcarrier spacing corresponding to an uplink physical channel assumed to transmit the HARQ feedback; or

a subcarrier spacing corresponding to an uplink bandwidth part in an active status.

12. The method according to claim 10, wherein the second preset subcarrier spacing is any of:

a subcarrier spacing corresponding to an uplink physical channel assumed to transmit the HARQ feedback; or

a subcarrier spacing corresponding to an uplink bandwidth part in an active status.

13. The method according to any one of claims 8-12, wherein determining, by the network device, the first time parameter required by the terminal device for processing the PDSCH carried by the HARQ process according to the status of the feedback of the HARQ process of the terminal device comprises:

determining candidate subcarrier spacings corresponding to the PDSCH carried by the HARQ process according to the status of the feedback of the HARQ process of the terminal device;

determining second time parameters corresponding to the candidate subcarrier spacings respectively according to a preset mapping relationship between second time parameters and subcarrier spacings;

determining a mapping relationship table between second time parameters and a number of symbols according to a capability of the terminal device; and

determining a maximum first time parameter corresponding to the second time parameters according to a mapping relationship in the mapping relationship table.

14. The method according to any one of claims 8-13, further comprising:

in response to the feedback of the HARQ process being enabled, determining an earliest time for transmitting the feedback of the HARQ process according to the first time parameter required for processing the PDSCH carried by the HARQ process; or

in response to the feedback of the HARQ process being disabled, determining an earliest time for transmitting another PDSCH carried by the HARQ process according to the first time parameter required for processing the PDSCH carried by the HARQ process.

15. A communication apparatus, configured at a terminal device side, comprising:

a processing module, configured to determine a first time parameter required for processing a physical downlink shared channel (PDSCH) carried by a hybrid automatic repeat request (HARQ) process according to a status of a feedback of the HARQ process.

16. The apparatus according to claim 15, wherein the processing module is configured to:

in response to the feedback of the HARQ process being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or

in response to the feedback of the HARQ process being disabled, determine the first time parameter required for processing the PDSCH carried by the HARQ process according to one of the first subcarrier spacing and the second subcarrier spacing.

17. The apparatus according to claim 15, wherein the processing module is configured to:

in response to the feedback of the HARQ process being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or

in response to the feedback of the HARQ process being disabled, determine the first time parameter required for processing the PDSCH carried by the HARQ process according to one of the first subcarrier spacing, the second subcarrier spacing, and a second preset subcarrier spacing.

18. The apparatus according to claim 17, wherein the first preset subcarrier spacing is any of:

a subcarrier spacing corresponding to an uplink physical channel for transmitting the HARQ feedback;
a subcarrier spacing corresponding to an uplink physical channel assumed to transmit the HARQ feedback; or
a subcarrier spacing corresponding to an uplink bandwidth part in an active status.

19. The apparatus according to claim 17, wherein the second preset subcarrier spacing is any of:

a subcarrier spacing corresponding to an uplink physical channel assumed to transmit the HARQ feedback; or
a subcarrier spacing corresponding to an uplink bandwidth part channel in an active status.

20. The apparatus according to any one of claims 15-19, wherein the processing module is configured to:

determine candidate subcarrier spacings corresponding to the PDSCH carried by the HARQ process according to the status of the feedback of the HARQ process;

determine second time parameters corresponding to the candidate subcarrier spacings respectively according to a preset mapping relationship between second time parameters and subcarrier spacings;

determine a mapping relationship table between second time parameters and a number of symbols according to a capability of the terminal device; and

determine a maximum first time parameter corresponding to the second time parameters according to a mapping relationship in the mapping relationship table.

21. The apparatus according to any one of claims 15-20, wherein the processing module is further configured to:

in response to the feedback of the HARQ process being enabled, determine an earliest time for transmitting the feedback of the HARQ process according to the first time parameter required for processing the PDSCH carried by the HARQ process; or

in response to the feedback of the HARQ process being disabled, determine an earliest time for receiving another PDSCH carried by the HARQ process according to the first time parameter required for processing the PDSCH carried by the HARQ process.

22. A communication apparatus, configured at a network device side, comprising:

a processing module, configured to determine a first time parameter required by a terminal device for processing a physical downlink shared channel (PDSCH) carried by a hybrid automatic repeat request (HARQ) process of the terminal device according to a status of a feedback of the HARQ process.

23. The apparatus according to claim 22, wherein the processing module is configured to:

in response to the feedback of the HARQ process of the terminal device being enabled, determine the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for transmitting the HARQ feedback; or

in response to the feedback of the HARQ process of the terminal device being disabled, determine the first time parameter required for processing the PDSCH carried by the HARQ process according to one of the first subcarrier spacing and the second subcarrier spacing.

24. The apparatus according to claim 22, wherein the processing module is configured to:

in response to the feedback of the HARQ process of the terminal device being enabled, determine the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a first preset subcarrier spacing; or

in response to the feedback of the HARQ process being disabled, determine the first time parameter required by the terminal device for processing the PDSCH carried by the HARQ process according to one of the first subcarrier spacing, the second subcarrier spacing, and a second preset subcarrier spacing.

25. The apparatus according to claim 24, wherein the first preset subcarrier spacing is any of:

a subcarrier spacing corresponding to an uplink physical channel for transmitting the HARQ feedback;

a subcarrier spacing corresponding to an uplink physical channel assumed to transmit the HARQ feedback; or

a subcarrier spacing corresponding to an uplink bandwidth part in an active status.

26. The apparatus according to claim 24, wherein the second preset subcarrier spacing is any of:

a subcarrier spacing corresponding to an uplink physical channel assumed to transmit the HARQ feedback; or

a subcarrier spacing corresponding to an uplink bandwidth part in an active status.

27. The apparatus according to any one of claims 22-26, wherein the processing module is configured to:

determine candidate subcarrier spacings corresponding to the PDSCH carried by the HARQ process according to the status of the feedback of the HARQ process of the terminal device;

determine second time parameters corresponding to the candidate subcarrier spacings respectively according to a preset mapping relationship between second time parameters and subcarrier spacings;

determine a mapping relationship table between second time parameters and a number of symbols according to a capability of the terminal device; and

determine a maximum first time parameter corresponding to the second time parameters according to a mapping relationship in the mapping relationship table.

28. The apparatus according to any one of claims 22-27, wherein the processing module is further configured to:

in response to the feedback of the HARQ process being enabled, determine an earliest time for transmitting the feedback of the HARQ process according to the first time parameter required for processing the PDSCH carried by the HARQ process; or

in response to the feedback of the HARQ process being disabled, determine an earliest time for transmitting another PDSCH carried by the HARQ process according to the first time parameter required for processing the PDSCH carried by the HARQ process.

29. A communication apparatus, comprising:

a processor; and

a memory, having stored therein computer programs,

wherein the processor is configured to execute the computer programs stored in the memory to cause the communication apparatus to perform the method according to any one of claims 1 to 7.

30. A communication apparatus, comprising:

a processor; and

a memory, having stored therein computer programs,

wherein the processor is configured to execute the computer programs stored in the memory to cause the communication apparatus to perform the method according to any one of claims 8 to 14.

31. A computer-readable storage medium, having stored therein instructions that, when executed, cause the method according to any one of claims 1 to 7 to be implemented.

32. A computer-readable storage medium, having stored therein instructions that, when executed, cause the method according to any one of claims 8 to 14 to be implemented.

access network device 11        terminal device 12

FIG. 1

| determining a first time parameter required for processing a physical downlink shared channel (PDSCH) carried by a hybrid automatic repeat request (HARQ) process according to a status of a feedback of the HARQ process | 201 |

FIG. 2

determining the status of the feedback of the HARQ process ⌐301

in response to the feedback of the HARQ process being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for sending the HARQ feedback /302

in response to the feedback of the HARQ process being disabled, determining the first time parameter required for processing the PDSCH carried by the HARQ process according to one of the first subcarrier spacing and the second subcarrier spacing ⌐303

FIG. 3

determining the status of the feedback of the HARQ process ⌐401

in response to the feedback of the HARQ process being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing /402

in response to the feedback of the HARQ process being disabled, determining the first time parameter required for processing the PDSCH carried by the HARQ process according to one of the first subcarrier spacing, the second subcarrier spacing, and a second preset subcarrier spacing ⌐403

FIG. 4

determining, by the network device, a first time parameter required by a terminal device for processing a physical downlink shared channel (PDSCH) carried by a hybrid automatic repeat request (HARQ) process of the terminal device according to a status of a feedback of the HARQ process — 501

FIG. 5

determining the status of the feedback of the HARQ process of the terminal device — 601

in response to the feedback of the HARQ process of the terminal device being enabled, determining the first time parameter required by the terminal device for processing the PDSCH carried by the HARQ process according to one of a first subcarrier spacing corresponding to a physical downlink control channel (PDCCH), a second subcarrier spacing corresponding to the PDSCH, and a third subcarrier spacing corresponding to an uplink physical channel for sending the HARQ feedback — 602

in response to the feedback of the HARQ process of the terminal device being disabled, determining the first time parameter required by the terminal device for processing the PDSCH carried by the HARQ process according to one of the first subcarrier spacing and the second subcarrier spacing — 603

FIG. 6

determining the status of the feedback of the HARQ process of the terminal device — 701

in response to the feedback of the HARQ process of the terminal device being enabled, determining the first time parameter required for processing the PDSCH carried by the HARQ process according to one of a first subcarrier spacing corresponding to a physical downlink control channel (PDCCH), a second subcarrier spacing corresponding to the PDSCH, and a first preset subcarrier spacing — 702

in response to the feedback of the HARQ process being disabled, determining the first time parameter required for processing the PDSCH carried by the HARQ process according to one of the first subcarrier spacing, the second subcarrier spacing, and a second preset subcarrier spacing — 703

FIG. 7

— 800

communication apparatus

— 801

processing module

FIG. 8

FIG. 9

FIG. 10

| | | |
|---|---|---|
| **INTERNATIONAL SEARCH REPORT** | International application No. | |
| | **PCT/CN2022/071680** | |

| | |
|---|---|
| **A.    CLASSIFICATION OF SUBJECT MATTER** | |
| H04W 72/04(2009.01)i | |
| According to International Patent Classification (IPC) or to both national classification and IPC | |

| |
|---|
| **B.    FIELDS SEARCHED** |
| Minimum documentation searched (classification system followed by classification symbols) |
| H04W; H04Q; H04L |
| Documentation searched other than minimum documentation to the extent that such documents are included in the fields searched |
| |
| Electronic data base consulted during the international search (name of data base and, where practicable, search terms used) |
| CNPAT, CNKI, WPI, EPODOC, 3GPP: 时间, 参数, 处理, 使能, 启用, 开启, 禁用, 停用, 停止, 状态, HARQ, PDSCH, time, process, parameter, enable, disable, state |

| |
|---|
| **C.    DOCUMENTS CONSIDERED TO BE RELEVANT** |

| Category* | Citation of document, with indication, where appropriate, of the relevant passages | Relevant to claim No. |
|---|---|---|
| X | WO 2020252708 A1 (GUANGDONG OPPO MOBILE TELECOMMUNICATIONS CORP., LTD.) 24 December 2020 (2020-12-24)<br>description, page 4 line 5-page 8 line 25, and page 12 line 7-page 13 line 13 | 1-32 |
| A | CN 112740589 A (SAMSUNG ELECTRONICS CO., LTD.) 30 April 2021 (2021-04-30)<br>entire document | 1-32 |
| A | CN 112311507 A (CHINA ACADEMY OF INFORMATION AND COMMUNICATIONS TECHNOLOGY) 02 February 2021 (2021-02-02)<br>entire document | 1-32 |
| A | CN 109803430 A (HUAWEI TECHNOLOGIES CO., LTD.) 24 May 2019 (2019-05-24)<br>entire document | 1-32 |
| A | ERICSSON. "On DRX, LCP, timing, HARQ, SR/BSR, and CG and SPS, R2-2106089"<br>*3GPP TSG-RAN WG2 #114-e*, 27 May 2021 (2021-05-27),<br>entire document | 1-32 |
| A | ERICSSON. "On scheduling, HARQ, and DRX for NTNs, R2-2103950"<br>*3GPP TSG-RAN WG2 #113bis-e*, 20 April 2021 (2021-04-20),<br>entire document | 1-32 |

| | |
|---|---|
| ☑ Further documents are listed in the continuation of Box C. | ☑ See patent family annex. |

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| | |
|---|---|
| Date of the actual completion of the international search | Date of mailing of the international search report |
| **02 September 2022** | **26 September 2022** |
| Name and mailing address of the ISA/CN | Authorized officer |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/071680**

**C.    DOCUMENTS CONSIDERED TO BE RELEVANT**

| Category* | Citation of document, with indication, where appropriate, of the relevant passages | Relevant to claim No. |
|-----------|-------------------------------------------------------------------------------------|------------------------|
| A | US 2021314100 A1 (SAMSUNG ELECTRONICS CO., LTD.) 07 October 2021 (2021-10-07) entire document | 1-32 |
| A | US 2021136830 A1 (ASUSTEK COMPUTER INC.) 06 May 2021 (2021-05-06) entire document | 1-32 |

Form PCT/ISA/210 (second sheet) (January 2015)

# EP 4 465 719 A1

| INTERNATIONAL SEARCH REPORT | | | | | | International application No. | |
| Information on patent family members | | | | | | PCT/CN2022/071680 | |

| Patent document cited in search report | | | Publication date (day/month/year) | Patent family member(s) | | | Publication date (day/month/year) |
|---|---|---|---|---|---|---|---|
| WO | 2020252708 | A1 | 24 December 2020 | CN | 113412595 | A | 17 September 2021 |
| CN | 112740589 | A | 30 April 2021 | WO | 2020022850 | A1 | 30 January 2020 |
| | | | | KR | 20200012702 | A | 05 February 2020 |
| | | | | KR | 20200012716 | A | 05 February 2020 |
| | | | | EP | 3823193 | A1 | 19 May 2021 |
| | | | | US | 2021184804 | A1 | 17 June 2021 |
| CN | 112311507 | A | 02 February 2021 | | None | | |
| CN | 109803430 | A | 24 May 2019 | WO | 2019096098 | A1 | 23 May 2019 |
| US | 2021314100 | A1 | 07 October 2021 | KR | 20200018141 | A | 19 February 2020 |
| | | | | WO | 2020032490 | A1 | 13 February 2020 |
| | | | | CN | 112753192 | A | 04 May 2021 |
| US | 2021136830 | A1 | 06 May 2021 | CN | 112788779 | A | 11 May 2021 |
| | | | | KR | 20210055606 | A | 17 May 2021 |

Form PCT/ISA/210 (patent family annex) (January 2015)